# EUROPEAN PATENT APPLICATION

(11) **EP 4 631 772 A1**
(43) Date of publication of application: **15.10.2025**
(21) Application number: 22967816.4
(22) Date of filing: 07.12.2022
(51) Int. Cl.: B60L 50/53, B60L 9/22, B60L 50/60

(54) **ELECTRICALLY DRIVEN VEHICLE, CONTROL DEVICE FOR ELECTRICALLY DRIVEN VEHICLE, AND CONTROL METHOD FOR ELECTRICALLY DRIVEN VEHICLE**

(71) Applicant: Hitachi Industrial Products, Ltd., Tokyo 101-0021 (JP)
(72) Inventor: FURUKAWA, Isao, Tokyo 101-0021 (JP); HIGASHIMATA, Itaru, Tokyo 101-0021 (JP); ABE, Yusuke, Tokyo 101-0021 (JP); MIYATA, Hiroaki, Tokyo 101-0021 (JP)
(74) Representative: MERH-IP Matias Erny Reichl Hoffmann Patentanwälte PartG mbB
(86) International application number: PCT/JP2022/045065
(87) International publication number: WO 2024/121965

(57) **Abstract**

A dump truck comprises a control device and a DCDC converter that outputs power to a power converter. When switching a power supply source to an electric motor from a battery to an overhead line, the control device operates the DCDC converter in an overhead line connection stable waiting state, and then operates the DCDC converter in a power supply switching processing state. The control device switches, when switching the power supply source to the electric motor from the overhead line to the battery, the DCDC converter operating in the power control state from the power control state to a voltage control state, and operates, after operating the DCDC converter in a first overhead line separation preparation state that limits an output current output to the power converter to zero, the DCDC converter in a second overhead line separation preparation state in which the output current output from the DCDC converter to the power converter increases toward a target value.

## Description

### Technical Field

The present invention relates to an electric drive vehicle, a control device for electric drive vehicle, and a control method for electric drive vehicle.

### Background Art

Patent Document 1 discloses, as an electric drive vehicle, a trolley bus that comprises a power storage device capable of supplying electric power, a power generation device, and a pantograph supplying power, and that is driven by electric power supplied from the power storage device, the power generation device and the pantograph. When the trolley bus travels in an intersection, the trolley bus separates the pantograph from overhead lines and is driven by power from the power storage device or the power generation device.

### Citation list

### Patent Literature

PTL 1: Japanese Patent Application Laid-Open No.2006-246568

### Summary of Invention

### Technical Problem

The present inventor is considering a trolley rechargeable type electric drive vehicle (for example, a trolley rechargeable EV dump truck) that adopts a "trolley rechargeable type" that does not have an engine and takes in the electric power necessary for operation from the overhead line and charges a battery at the same time.

The trolley rechargeable type electric drive vehicle travels by the electric power supplied from battery power in a state where it is not connected to the overhead line. The trolley rechargeable type electric drive vehicle travels by the electric power supplied from the overhead line in a state where it is connected to the overhead line. In the trolley rechargeable type electric drive vehicle, an AC drive system and the battery are connected by a DCDC converter (a bidirectional chopper). The trolley rechargeable type electric drive vehicle switches the charging and discharging of the battery by means of the DCDC converter (the bidirectional chopper) according to the connection status with the overhead line.

In the trolley rechargeable type electric drive vehicle, in each case where the power supply source to the electric motor is switched from the battery to the overhead line and when the power supply source is switched from the overhead line to the battery, it is required to switch the power supply source while suppressing the adverse effect on the trolley rechargeable type electric drive vehicle.

The present invention has been made to solve the above problems. That is, one of the objects of the present invention is to provide an electric drive vehicle, a control device for electric drive vehicle, and a control method for electric drive vehicle that can suppress the adverse effect on the electric drive vehicle when switching the power supply source of the electric motor.

### Solution to Problem

In order to solve the above problems, the present invention trolley rechargeable type electric drive vehicle comprises an electric motor, a battery, and a current collector, the trolley rechargeable type electric drive vehicle traveling using, as a power source, the electric motor driven by electric power supplied from the battery and / or an overhead line, the trolley rechargeable type electric drive vehicle being capable of charging the battery using the electric power supplied from the overhead line, wherein,
the trolley rechargeable type electric drive vehicle comprises:
   a power converter that converts input DC power into AC power and outputs the AC power to the electric motor;
   a converter capable of operating in any one of:
      a voltage control state where the converter is connected to the power converter, the DC power from the battery is input, an input voltage is converted, and the DC power of the converted voltage is output to the power converter; and
      an electric power control state where the DC power from the overhead line is input, the input voltage is converted, and the DC power of the converted voltage is output to the battery;
   the current collector in which the input side of the electric power is connected to the overhead line and the output side of the electric power is connected to a connection point between the converter and the power converter;
   a switch unit for switching to any of:
      an overhead line power supply state that is capable of setting either a conduction state or a non-conduction state between the current collector and the connection point; and that supplies, from the overhead line via the current collector, the electric power to the power converter or both of the power converter and the converter by making the conduction state between the overhead line and the connection point; and
      an overhead line power non-supply state that cuts off power supply from the overhead line to the power converter via the current collector by making the non-conduction state between the current collector and the connection point; and
   a control device for controlling the converter and the switch unit; and
the control device is configured to:
   operate, when switching a power supply source to the electric motor from the battery to the overhead line, the converter in a power supply switching processing state in which an output current of the converter decreases toward zero after operating the converter in an overhead line connection stable waiting state that limits the output current output from the converter operating in the voltage control state to the power converter;
   switch, when switching the power supply source to the electric motor from the overhead line to the battery, the converter operating in the electric power control state from the electric power control state to the voltage control state; and
   operate, after operating the converter in a first overhead line separation preparation state that limits the output current output to the power converter to zero, the converter in a second overhead line separation preparation state in which the output current output from the converter to the power converter increases toward a target value.

The present invention control device for electric drive vehicle is applied to a trolley rechargeable type electric drive vehicle comprising an electric motor, a battery, and a current collector, the trolley rechargeable type electric drive vehicle traveling using, as a power source, the electric motor driven by electric power supplied from the battery and / or an overhead line, the trolley rechargeable type electric drive vehicle being capable of charging the battery using the electric power supplied from the overhead line,
wherein,
the trolley rechargeable type electric drive vehicle comprises:
   a power converter that converts input DC power into AC power and outputs the AC power to the electric motor;
   a converter capable of operating in any one of:
      a voltage control state where the converter is connected to the power converter, the DC power from the battery is input, an input voltage is converted, and the DC power of the converted voltage is output to the power converter; and
      an electric power control state where the DC power from the overhead line is input, the input voltage is converted, and the DC power of the converted voltage is output to the battery;
   the current collector in which the input side of the electric power is connected to the overhead line and the output side of the electric power is connected to a connection point between the converter and the power converter; and
   a switch unit for switching to any of:
      an overhead line power supply state that is capable of setting either a conduction state or a non-conduction state between the current collector and the connection point; and that supplies, from the overhead line via the current collector, the electric power to the power converter or both of the power converter and the converter by making the conduction state between the overhead line and the connection point; and
      an overhead line power non-supply state that cuts off power supply from the overhead line to the power converter via the current collector by making the non-conduction state between the current collector and the connection point;
the control device is configured to control the converter and the switch unit; and
the control device is configured to:
   operate, when switching a power supply source to the electric motor from the battery to the overhead line, the converter in a power supply switching processing state in which an output current of the converter decreases toward zero after operating the converter in an overhead line connection stable waiting state that limits the output current output from the converter operating in the voltage control state to the power converter;
   switch, when switching the power supply source to the electric motor from the overhead line to the battery, the converter operating in the electric power control state from the electric power control state to the voltage control state; and
   operate, after operating the converter in a first overhead line separation preparation state that limits the output current output to the power converter to zero, the converter in a second overhead line separation preparation state in which the output current output from the converter to the power converter increases toward a target value.

The present invention control method for electric drive vehicle is applied to a trolley rechargeable type electric drive vehicle comprising an electric motor, a battery, and a current collector, the trolley rechargeable type electric drive vehicle traveling using, as a power source, the electric motor driven by electric power supplied from the battery and / or an overhead line, the trolley rechargeable type electric drive vehicle being capable of charging the battery using the electric power supplied from the overhead line,
wherein,
the trolley rechargeable type electric drive vehicle comprises:
   a power converter that converts input DC power into AC power and outputs the AC power to the electric motor;
   a converter capable of operating in any one of:
      a voltage control state where the converter is connected to the power converter, the DC power from the battery is input, an input voltage is converted, and the DC power of the converted voltage is output to the power converter; and
      an electric power control state where the DC power from the overhead line is input, the input voltage is converted, and the DC power of the converted voltage is output to the battery;
   the current collector in which the input side of the electric power is connected to the overhead line and the output side of the electric power is connected to a connection point between the converter and the power converter;
   a switch unit for switching to any of:
      an overhead line power supply state that is capable of setting either a conduction state or a non-conduction state between the current collector and the connection point; and that supplies, from the overhead line via the current collector, the electric power to the power converter or both of the power converter and the converter by making the conduction state between the overhead line and the connection point; and
      an overhead line power non-supply state that cuts off power supply from the overhead line to the power converter via the current collector by making the non-conduction state between the current collector and the connection point; and
   a control device for controlling the converter and the switch unit; and
the control method: by using the control device,
   operates, when switching a power supply source to the electric motor from the battery to the overhead line, the converter in a power supply switching processing state in which an output current of the converter decreases toward zero after operating the converter in an overhead line connection stable waiting state that limits the output current output from the converter operating in the voltage control state to the power converter;
   switches, when switching the power supply source to the electric motor from the overhead line to the battery, the converter operating in the electric power control state from the electric power control state to the voltage control state; and
   operates, after operating the converter in a first overhead line separation preparation state that limits the output current output to the power converter to zero, the converter in a second overhead line separation preparation state in which the output current output from the converter to the power converter increases toward a target value.

### Advantageous Effect of Invention

According to the present invention, it is possible to suppress the adverse effect on the electric drive vehicle when switching the power supply source of the electric motor.

### Brief Description of Drawings

[FIG. 1] FIG. 1 shows an example of a non-trolley mode section and a trolley mode section where a dump truck travels.
[FIG. 2] FIG. 2 is a block diagram showing an example of an internal configuration of a trolley type dump truck.
[FIG. 3A] FIG. 3A illustrates the switching operation from battery operation to trolley operation.
[FIG. 3B] FIG. 3B illustrates the switching operation from battery operation to trolley operation.
[FIG. 4A] FIG. 4A illustrates the switching operation from battery operation to trolley operation.
[FIG. 4B] FIG. 4B illustrates the switching operation from battery operation to trolley operation.
[FIG. 5A] FIG. 5A illustrates the switching operation from battery operation to trolley operation.
[FIG. 5B] FIG. 5B illustrates the switching operation from battery operation to trolley operation.
[FIG. 6A] FIG. 6A illustrates the switching operation from battery operation to trolley operation.
[FIG. 6B] FIG. 6B illustrates the switching operation from battery operation to trolley operation.
[FIG. 7A] FIG. 7A illustrates the switching operation from battery operation to trolley operation.
[FIG. 7B] FIG. 7B illustrates the switching operation from battery operation to trolley operation.
[FIG. 8A] FIG. 8A illustrates the switching operation from battery operation to trolley operation.
[FIG. 8B] FIG. 8B illustrates the switching operation from battery operation to trolley operation.
[FIG. 9A] FIG. 9A illustrates the switching operation from trolley operation to battery operation.
[FIG. 9B] FIG. 9B illustrates the switching operation from trolley operation to battery operation.
[FIG. 10A] FIG. 10A illustrates the switching operation from trolley operation to battery operation.
[FIG. 10B] FIG. 10B illustrates the switching operation from trolley operation to battery operation.
[FIG. 11A] FIG. 11A illustrates the switching operation from trolley operation to battery operation.
[FIG. 11B] FIG. 11B illustrates the switching operation from trolley operation to battery operation.
[FIG. 12A] FIG. 12A illustrates the switching operation from trolley operation to battery operation.
[FIG. 12B] FIG. 12B illustrates the switching operation from trolley operation to battery operation.
[FIG. 13A] FIG. 13A illustrates the switching operation from trolley operation to battery operation.
[FIG. 13B] FIG. 13B illustrates the switching operation from trolley operation to battery operation.
[FIG. 14A] FIG. 14A illustrates the switching operation from trolley operation to battery operation.
[FIG. 14B] FIG. 14B illustrates the switching operation from trolley operation to battery operation.
[FIG. 15A] FIG. 15A illustrates the switching operation from trolley operation to battery operation.
[FIG. 15B] FIG. 15B illustrates the switching operation from trolley operation to battery operation.

### Description of Embodiments

Hereinafter, an embodiment of the present invention will be described with reference to the drawings. It should be noted that in all the drawings of the embodiment, the same or corresponding portions may be denoted by the same numerals.

### <<Embodiment>>

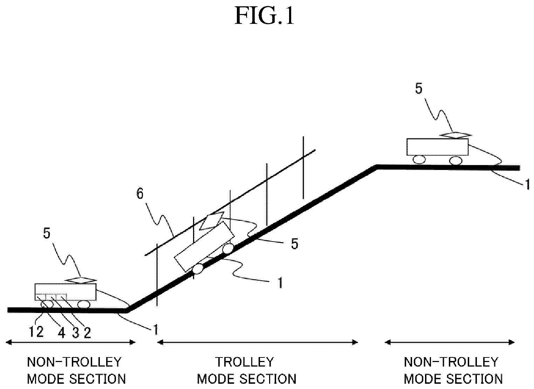

A dump truck 1 which is an example of a trolley rechargeable type electric drive vehicle according to an embodiment of the present invention will be described. FIG. 1 is a diagram illustrating an example of a non-trolley mode section and a trolley mode section in which the dump truck 1 travels.

The dump truck 1 is a "trolley rechargeable type" dump truck that does not have an engine installed, takes in the electric power required for operation from an overhead line 6, and charges a battery 2 at the same time.

The dump truck 1 includes the pantograph 5 as a current collector, the battery 2 as a power source, a DCDC converter 3 connected to the battery 2, and an electric motor 4 driven by AC power.

The dump truck 1 can switch between two modes (battery operation (non-trolley mode) and trolley operation (trolley mode)) and travel (forward or reverse).

The section where the dump truck 1 travels, for example, on a flat road, is the non-trolley mode section that travels by battery operation. At this time, the electric power output by the battery 2 is supplied to the electric motor 4 to drive a wheel 12 and drive the dump truck 1.

The section where the dump truck 1 travels on a steep slope is the trolley mode section that travels by trolley operation. On such a slope, since the speed of the dump truck 1 is slowed down only by the output of the battery 2, the electric power is received from the overhead line 6 by trolley operation. At this time, the pantograph 5 comes into contact with the overhead line 6 and collects DC power from the overhead line 6. The pantograph 5 supplies DC power collected from the overhead line 6 to the electric motor 4 via a power converter 10. In the trolley mode section, the battery 2 is charged by the electric power supplied from the overhead line 6.

The dump truck 1 at the time of trolley operation can travel without using the power of the battery 2, and the battery 2 can be charged with power from the overhead line 6. Thereafter, when the dump truck 1 goes up the slope and travels on a flat road again, it switches to battery operation.

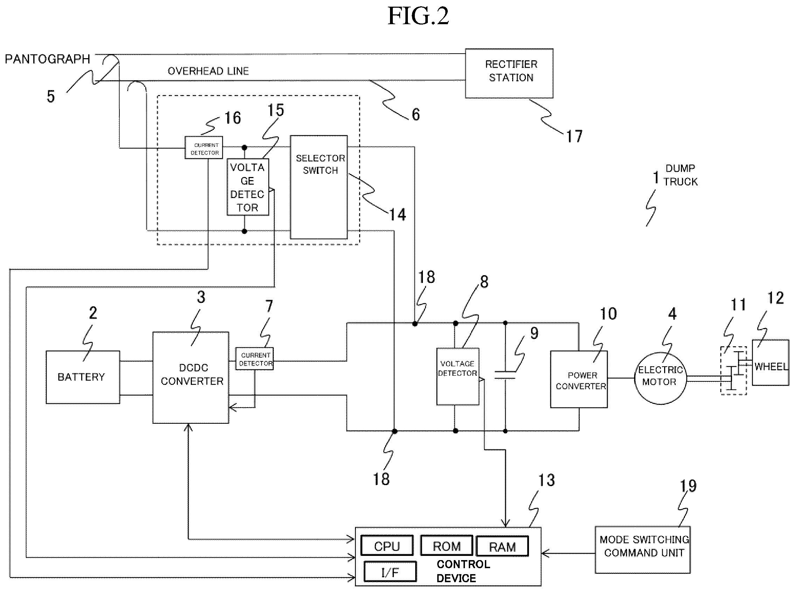

FIG. 2 is a block diagram illustrating an internal configuration example of the trolley type rechargeable dump truck 1. As shown in FIG. 2, the dump truck 1 includes the battery 2, a DCDC converter 3, the electric motor 4, the pantograph 5, a current detector 7, a voltage detector 8, a smoothing capacitor 9, the power converter 10, a gear 11, the wheel 12, a control device 13, a selector switch 14, a voltage detector 15, a current detector 16, a connection point 18, and a mode switching command unit 19. A rectifier station 17 is installed on the overhead line 6.

The battery 2 is a battery module including an assembled battery composed of a plurality of secondary batteries that can be charged and discharged. The current detector 7 is connected between one terminal of the DCDC converter 3 and the connection point 18. The current detector 7 outputs the DC current value detected between the DCDC converter 3 and the connection point 18 to the DCDC converter 3.

The voltage detector 8 is connected to both terminals of the DCDC converter 3. When the voltage detector 8 detects the DC voltage (internal DC bus voltage), the detected DC voltage value is sent to the control device 13.

The smoothing capacitor 9 is connected in parallel to the DCDC converter 3. The smoothing capacitor 9 charges and smooths the DC voltage supplied from the DCDC converter 3 or the DC voltage supplied from the overhead line 6 via the selector switch 14.

The power converter 10 is connected in parallel to the smoothing capacitor 9 and converts the smoothed DC power output from the smoothing capacitor 9 into AC power.

The electric motor 4 is driven by AC power output from the power converter 10 and drives the gear 11. The wheel 12 is driven by the electric motor 4 via the gear 12. As a result, the dump truck 1 travels.

The control device 13 receives a DC current value from the current detector 7 and a DC voltage value from the voltage detector 8. The control device 13 controls the DCDC converter 3. The control device 13 is, for example, an ECU (Electronic Control Unit). An ECU is an electronic control unit (Electronic Control Unit) that includes a microcomputer as the main part, and is also called a controller. The microcomputer includes a CPU, a ROM, a RAM, and an interface (I / F), and etc. The CPU implements various functions by executing instructions (programs, routines) stored in the ROM.

The selector switch 14 is connected between the pantograph 5 and the connection point 18, and switches the power source input to the power converter 10 to either the overhead line 6 or the battery 2. The selector switch 14 cuts off the DC power supplied from the overhead line 6 in battery operation, and outputs the DC power supplied from the overhead line 6 from the connection point 18 to the power converter 10 in trolley operation. That is, the selector switch 14 can be set to either a conduction state or a non- conduction state between the pantograph 5 and the connection point 18. The selector switch 14 provides a conduction state between the overhead line 6 and the connection point 18 or a non-conduction state between pantograph 5 and connection point 18 to thereby switch any one of an overhead line power supply state supplying, via the pantograph 5, power from the overhead line 6 to the power converter 10, or to both the power converter 10 and the DCDC converter 3 and an overhead line power non-supply state that cuts off power supply from the overhead line 6 to the pantograph 5 via the pantograph 5.

The voltage detector 15 detects the DC voltage between the two pantographs 5 in contact with the overhead line 6, and outputs the DC voltage value to the control device 13.

The current detector 16 is connected between the overhead line 6 flowing through one pantograph 5 out of the two pantographs 5 and the selector switch 14. The current detector 18 outputs the DC current value detected between the overhead line 6 and the selector switch 14 to the control device 13 in trolley operation.

The rectifier station 17 rectifies the DC power supplied to the overhead line 6. The connection point 18 is used to receive the output power of the DCDC converter 3 and the DC power of the pantograph 5. The selector switch 14 is connected in parallel to the DCDC converter 3 and the smoothing capacitor 9 via the connection point 18.

The mode switching command unit 19 instructs the control device 13 to switch between battery operation in which DC power supplied from the DCDC converter 3 is output to the power converter 10 and the trolley operation in which DC power supplied from the overhead line 6 is output to the power converter 10.

Next, an operation example in each part of the dump truck 1 will be described. The selector switch 14 is off (non-conduction state) during battery operation. At this time, DC power is output from the battery 2 via the DCDC converter **3.** The DC power output by the DCDC converter 3 is smoothed by the smoothing capacitor 9 and converted into AC power by the power converter 10. This AC power is output to the electric motor **4.** The electric motor 4 connected to the power converter 10 is connected to the wheel 12 via the gear 11. When the electric motor 4 drives the gear 11, the wheel 12 rotates, and the dump truck 1 moves forward or backward, or accelerates.

The selector switch 14 is on (conduction state) during trolley operation. At this time, the pantograph 5 is connected to the overhead line 6, and the DC power rectified by the rectifier station 17 is supplied to the power converter 10 via the connection point 18. The power converter 10 converts DC power supplied from the overhead line 6 into AC power. Then, the power converter 10 drives the electric motor 4. The electric motor 4 is connected to the wheel 12 via the gear 11, and the electric motor 4 rotates the wheel 12. At this time, the DCDC converter 3 operates in a charge control mode that controls the power for charging the battery 2. In the charge control mode, DC power from the overhead line 6 is also supplied to the battery 2 by the DCDC converter 3. The overhead line voltage is detected by the voltage detector 15. The overhead line current is detected by the current detector 16.

### <Switching operation from battery operation to trolley operation>

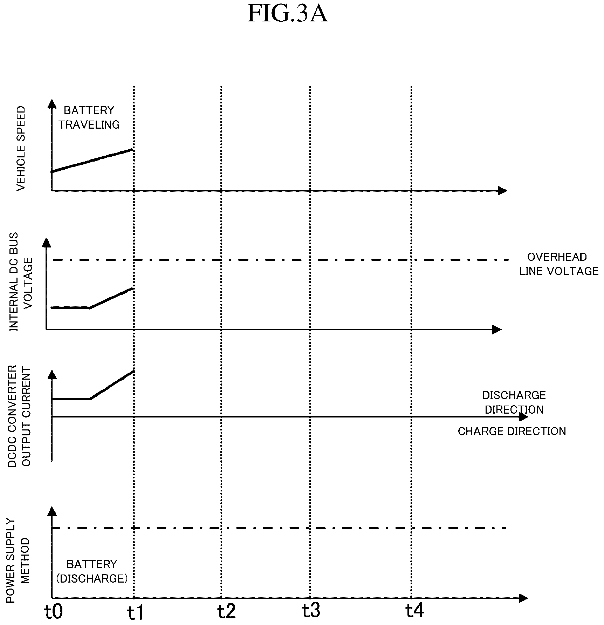

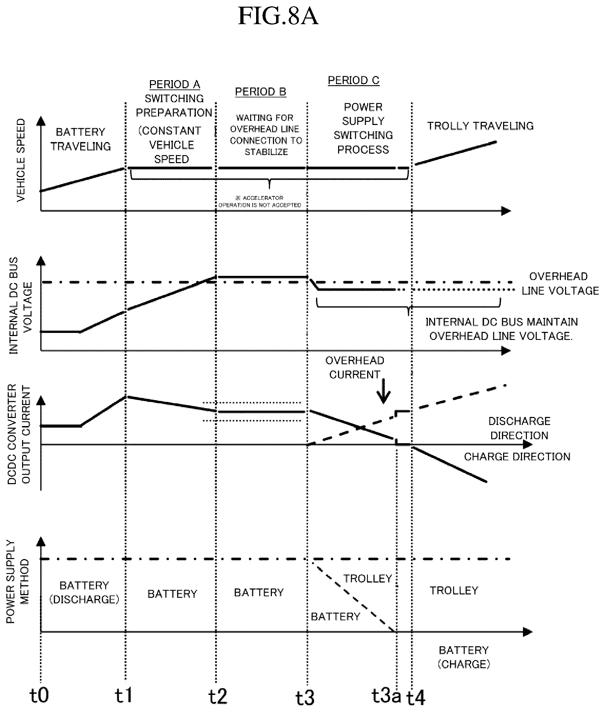

With reference to FIGS. 3A to 8B, a switching operation from battery operation to trolley operation (a switching operation when switching the power supply source to the electric motor 4 from the battery 2 to the overhead line 6) will be described. As shown in FIG. 3A, the DCDC converter 3 is in a battery traveling state for the period from time t0 to the time immediately before time t1. In the battery traveling state, the DCDC converter 3 operates in a voltage control mode (also referred to as a "voltage control state") that operates to control the internal DC bus voltage by the output voltage.

The control device 13 transmits a voltage command for controlling the internal DC bus voltage to the DCDC converter 3. The control device 13 sets the selector switch 14 to the OFF state (non-conduction state). The DCDC converter 3 converts the DC power from the battery 2 input to the DCDC converter 3 into a voltage according to the voltage command and outputs it.

The DCDC converter 3 has a power upper limit limiter function and a power lower limit limiter function. The control device 13 can set a power upper limit limiter and a power lower limit limiter for the DCDC converter 3. The output power of the DCDC converter 3 is limited so that the output power (output current) does not exceed the power upper limit limiter with the power upper limit limiter as the upper limit. The output power of the DCDC converter 3 is limited so that the output power (output current) does not fall below the power lower limit limiter with the power lower limit limiter as the lower limit.

During the period from time t0 to the time immediately before time t1, the control device 13 sets both the power upper limit limiter and the power lower limit limiter without constraint.

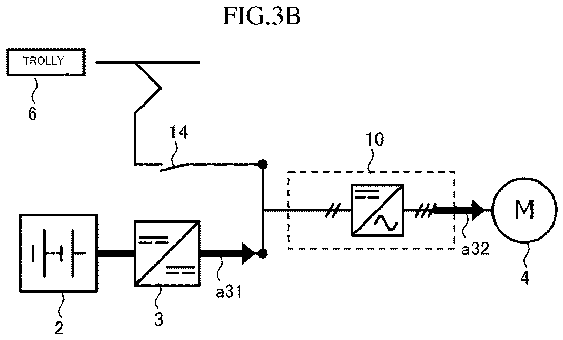

In the period from time t0 to the time immediately before time t1, as shown by arrow a31 and arrow a32 in FIG. 3B, the DC power input from the battery 2 to the DCDC converter 3 is converted to a voltage according to the voltage command by the DCDC converter 3 and the DC power of the converted voltage is output from the DCDC converter 3. The DC power output from the DCDC converter 3 is input to the power converter 10. The DC power input to the power converter 10 is converted into AC power and output to the electric motor 4 as a drive voltage (drive power) for driving the electric motor 4.

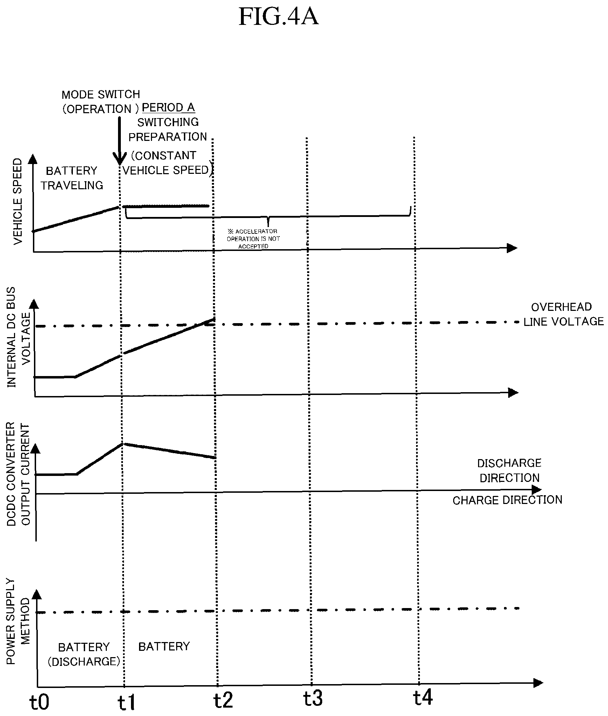

As shown in FIG. 4A, when the mode switching operation button (not shown) provided by the dump truck 1 is operated at time t1, the mode switching command unit 19 transmits a command to switch the dump truck 1 from battery operation to trolley operation to the control device 13. The control device 13 controls (switches) so that the DCDC converter 3 operates in a switching preparation state.

During the period (period A) from time t1 to the time immediately before time t2, the control device 13 controls the DCDC converter 3 so that it operates in the switching preparation state. In the switching preparation state, the DCDC converter 3 operates in the voltage control mode and operates to increase the output voltage so that the internal DC bus voltage is equal to or greater than the overhead line voltage.

The control device 13 sets both the power upper limit limiter and the power lower limit limiter without constraint. The control device 13 converts the voltage of the battery 2 input to the DCDC converter 3 into a voltage according to a voltage command value by transmitting the voltage command to the DCDC converter 3 so as to gradually rise to the voltage of "overhead line voltage + predetermined voltage", and outputs it. As a result, the selector switch 14 is later set to a state of being on, the potential difference can not be increased when the operation state of the dump truck 1 is switched from the battery operation to the trolley operation, and therefore, it is possible to reduce the possibility that the rush current flows and damages the equipment by increasing the potential difference. It should be noted that in the period from time t1 to time t4, the dump truck 1 disables the accelerator operation and controls a vehicle speed so that the vehicle speed is constant in order to stabilize the output current.

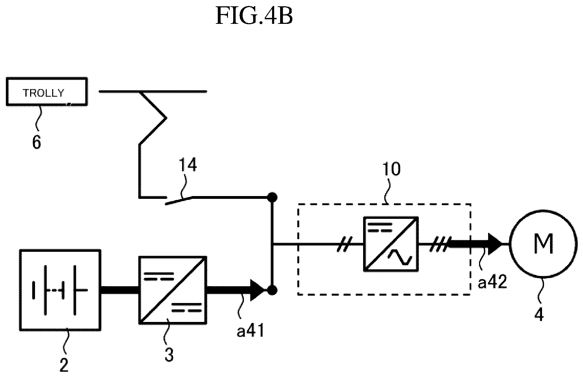

As shown in FIG. 4B, in period A, as shown in arrows a41 and a42, the DC power input from the battery 2 to the DCDC converter 3 is converted to a voltage according to the voltage command by the DCDC converter 3 and output from the DCDC converter 3. The DC power output from the DCDC converter 3 is input to the power converter 10. The DC power input to the power converter 10 is converted into AC power and output to the electric motor 4 as drive power for driving the electric motor 4.

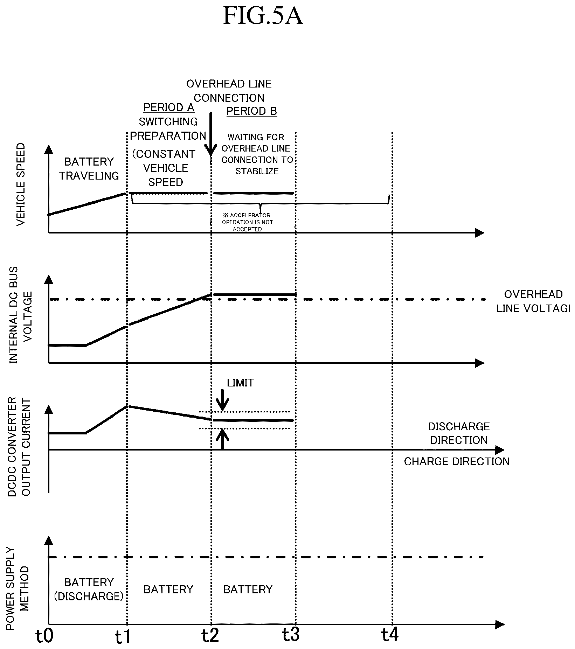

As shown in FIG. 5A, at time t2, the control device 13 sets (switches) the selector switch 14 from the OFF state (non-conduction state) to the ON state (conduction state).

During the period from time t2 to the time immediately before time t3 (period B), the control device 13 controls (switches) so that the DCDC converter 3 operates in an overhead line connection stable waiting state.

In the overhead line connection stable waiting state, the DCDC converter 3 operates in the voltage control mode, and converts the DC power from the battery 2 input to the DCDC converter 3 into a DC voltage (overhead line voltage + predetermined voltage) in accordance with the voltage command and outputs it. The control device 13 controls the output power of the DCDC converter 3. Specifically, the control device 13 sets the power upper limit limiter to "the final power value at the time immediately before time t2 + a predetermined power". The control device 13 sets the power lower limit limiter to "the final power value at the time immediately before time t2 - the predetermined power". As a result, the output power (output current) of the DCDC converter 3 is limited so that it does not exceed the power upper limit limiter with the power upper limit limiter ("final power value at the time immediately before time t2 + predetermined power") as the upper limiter. The output power (output current) of the DCDC converter 3 is limited so that it does not fall below the power lower limit limiter with the power lower limit limiter ("final power value of the time immediately before time t2 - predetermined power") as the lower limit.

When the overhead line 6 and the internal bus are connected by switching the selector switch 14 from the off state (non-conduction state) to the ON state (conduction state), the output current of the DCDC converter 3 may be affected by fluctuations in the overhead line voltage. The output current is limited to suppress the effect of fluctuations in the overhead line voltage.

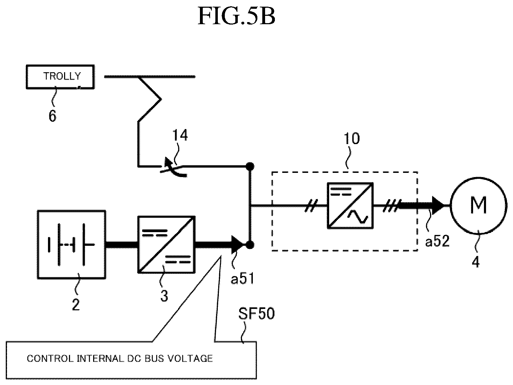

As shown in FIG. 5B, in the period B, as shown by arrows a51 and a52, the DC power from the battery 2 is input to the DCDC converter 3, converted to a voltage according to the voltage command, and output. As shown in the description of the dialogue balloon SF50, the internal DC bus voltage is controlled by the output voltage of the DCDC converter 3. The DC power output from the DCDC converter 3 is input to the power converter 10. The DC power input to the power converter 10 is converted into AC power and output to the electric motor 4 as drive power for driving the electric motor 4.

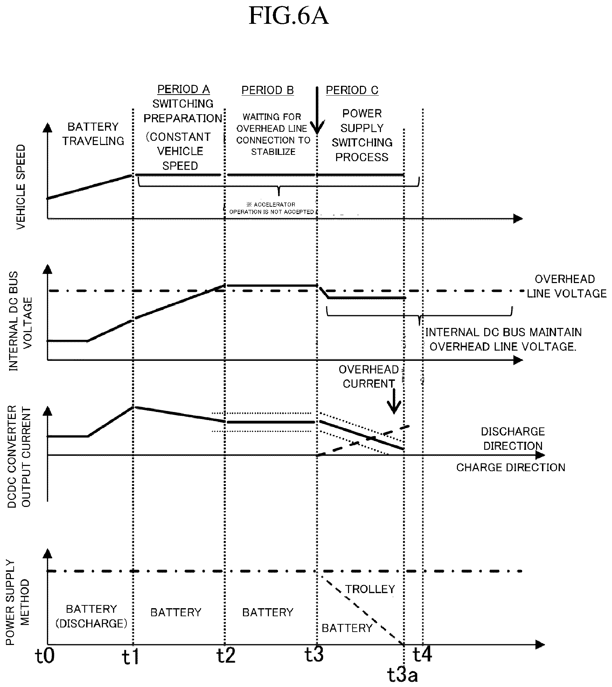

As shown in FIG. 6A, in the period (period C) from time t3 when a certain period (predetermined period) has elapsed from time t2 to the time immediately before time t3a, the control device 13 controls (switches) the DCDC converter 3 so that it operates in a power supply switching processing state. In the power supply switching processing state, the DCDC converter 3 operates in the voltage control mode. It should be noted that the internal DC bus voltage is maintained by the overhead line voltage supplied from the overhead line 6.

The control device 13 controls the output power of the DCDC converter 3. Specifically, the control device 13 sets the power upper limit limiter so as to gradually or stepwise decrease from "the final power value of the time immediately before time t2 + predetermined power" to zero as time passes with a predetermined change amount of change per unit time. The control device 13 sets the power lower limit limiter so as to gradually or stepwise decrease from "the final power value of the time immediately before time t2 - the predetermined power" to zero as time passes with the same amount of change per predetermined unit time as described above.

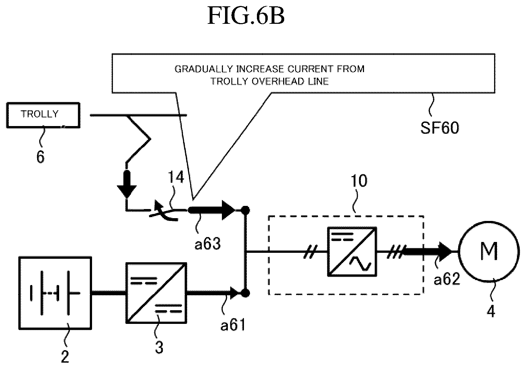

Thereby, as shown in FIG. 6B, in the period C, the output current (output power) of the DCDC converter 3 shown by arrow a61 is controlled to decrease toward zero. On the other hand, as shown in the description of the dialogue balloon SF60, the overhead line current supplied to the power converter 10 indicated by arrow a63 gradually increases.

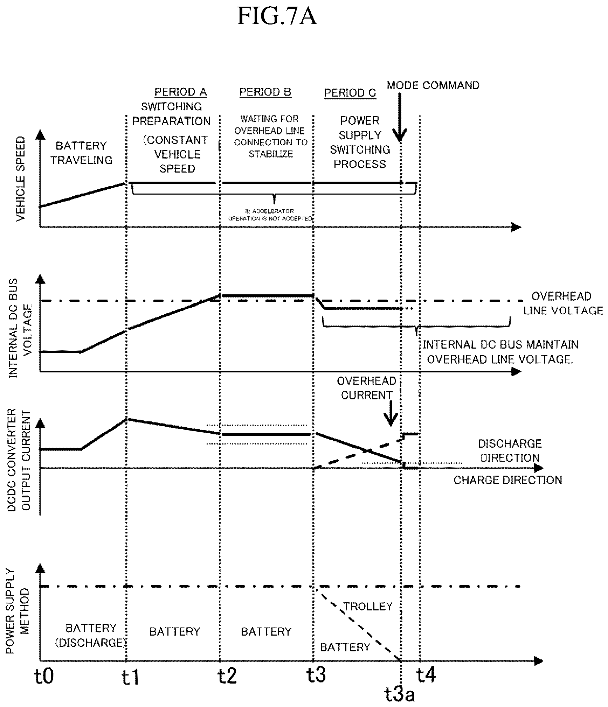

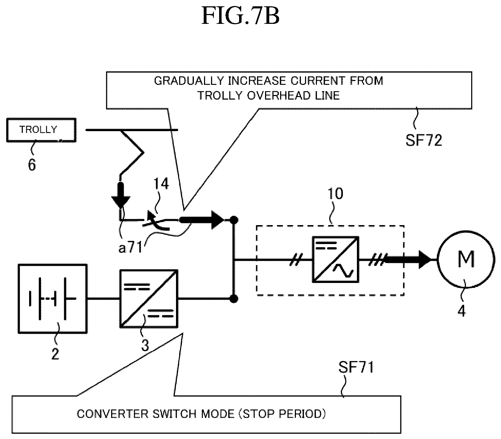

Therefore, the control device 13 can smoothly switch the power supply source of power supply to the electric motor 4 shown in arrow a62 from the battery 2 to the overhead line 6 (smoothly switching without sudden power fluctuations) to thereby suppress the impact on the traveling of the dump truck 1 when switching from battery operation to trolley operation. As shown in FIG. 7A, at time t3a, when the output current of the DCDC converter 3 reaches a threshold value (e.g., zero), the control device 13 sends a command to the DCDC converter 3 to change its operating mode from the voltage control mode to the power control mode (also referred to as the "power control state") that operates to charge the battery 2 with power supplied by the DCDC converter 3. The DCDC converter 3 switches the operation of the DCDC converter 3 from the voltage control mode to the power control mode. During this switching, as shown in the description of the dialogue balloon SF71, the operation of the DCDC converter 3 stops. As shown in FIG. 7B, the overhead line current shown by arrow a71 during the period from time t3a to the time immediately before time t4 gradually increases as shown in the description of the dialogue balloon SF72.

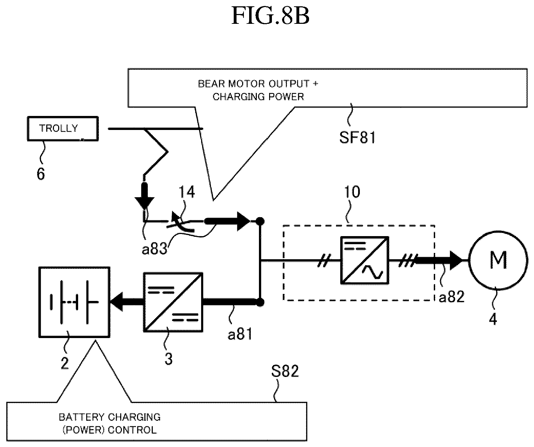

As shown in FIG. 8A, at time t4 or later, the control device 13 controls (switches) the DCDC converter 3 so that it operates in a trolley traveling state. In the trolley traveling state, the DCDC converter 3 operates in the power control mode. In the power control mode, the DC power is input from the overhead line 6 to the DCDC converter 3, the voltage is converted, and is output from the DCDC converter 3. The DC power output from the DCDC converter 3 is input to the battery 2 to charge the battery 2. The control device 13 sets the voltage upper limit limiter of the DCDC converter 3 to the overvoltage threshold and sets a voltage lower limit limiter of the DCDC converter 3 to zero. As shown by arrows a81 to a83 and the description of the dialogue balloon SF81 and the dialogue balloon SF82 in FIG. 8B, the electric motor 4 is driven by the power supplied from the overhead line 6 after time t4 and the battery 2 is charged.

### <Switching operation from trolley operation to battery operation>

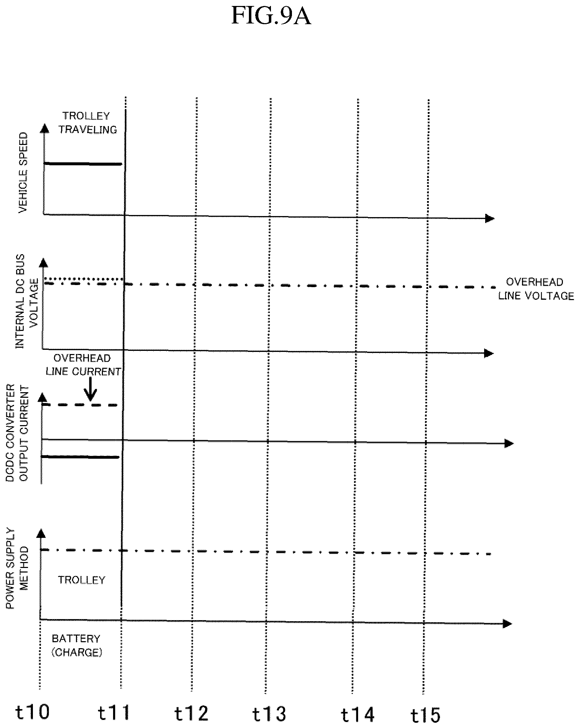

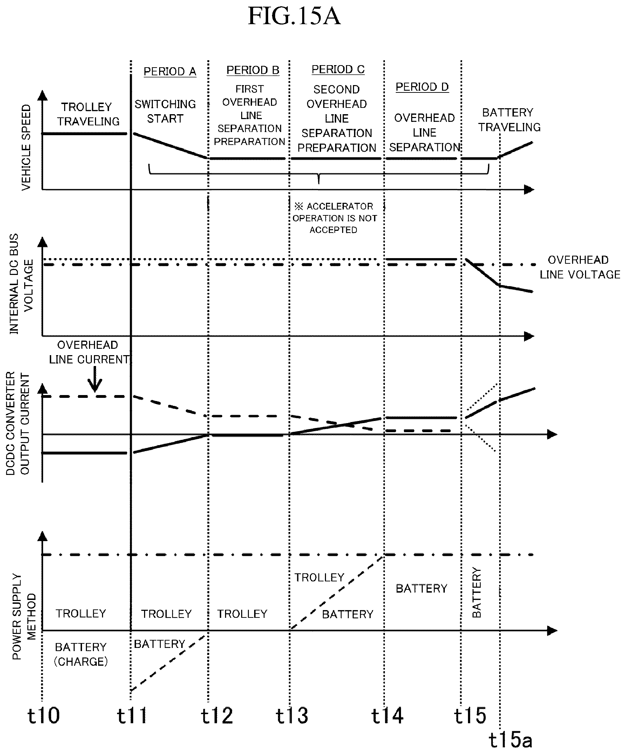

With reference to FIGS. 9A to 15B, a switching operation from trolley operation to battery operation (switching operation when switching the power supply source to the electric motor 4 from the overhead line 6 to the battery 2) will be described. As shown in FIG. 9A, the DCDC converter 3 is in the trolley traveling state for the period from time t10 to the time immediately before time t11. In the trolley traveling state, the DCDC converter 3 operates in a power control mode, which is a control state that operates to charge the battery 2 by outputting the DC power input from the overhead line 6 to the battery 2. The control device 13 sets the selector switch 14 to the ON state (conduction state).

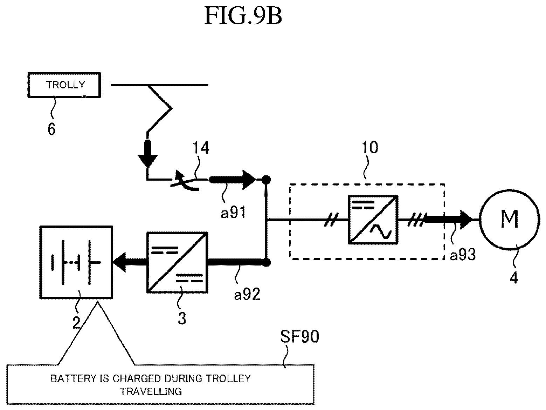

In the period from time t10 to the time immediately before time t11, as shown in the arrows a91 to a93 of FIG. 9B and the description of the dialogue balloon SF90, the electric motor 4 is driven by the power supplied from the overhead line 6 and the battery 2 is charged.

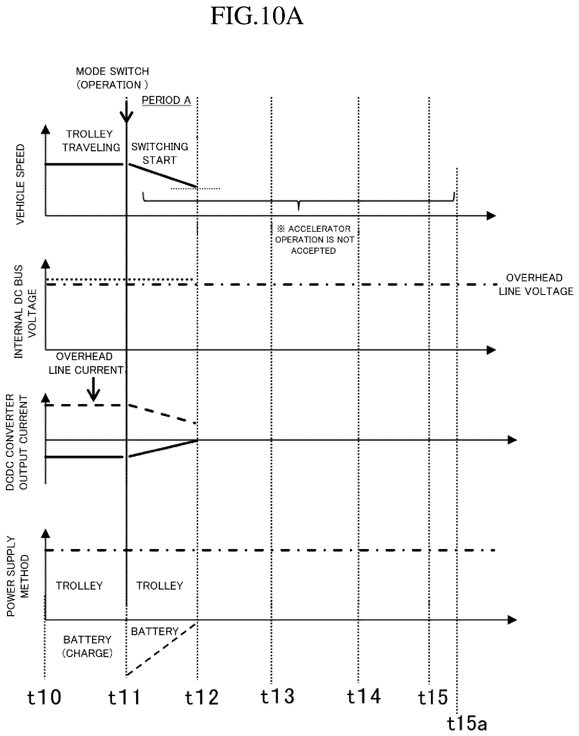

As shown in FIG. 10A, when the mode switching operation button (not shown) provided by the dump truck 1 is operated at time t11, the mode switching command unit 19 transmits a command to switch the dump truck 1 from trolley operation to battery operation to the control device 13. The control device 13 switches so that the DCDC converter 3 operates in a switching start state.

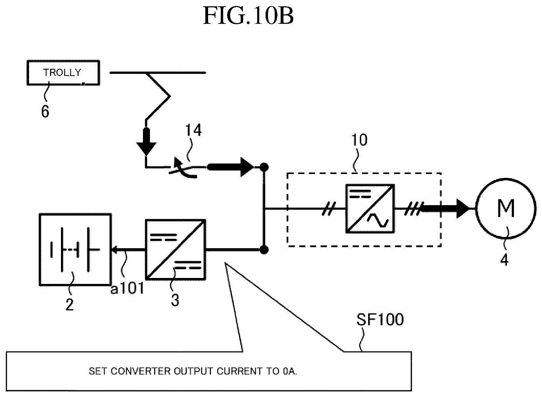

During the period (period A) from time t11 to the time immediately before time t12, the DCDC converter 3 operates in the switching start state. In the switching start state, the DCDC converter 3 operates in the power control mode. The control device 13 sets the voltage upper limit limiter of the DCDC converter 3 to the overvoltage threshold and sets the voltage lower limit limiter of the DCDC converter 3 to zero. As a result, in the switching start state, the DCDC converter 3 operates so that the output current (output power) of the DCDC converter 3 shown by arrow a101 gradually becomes zero, as shown in the description of the dialogue balloon SF100 in FIG. 10B. It should be noted that in the period from time t11 to time t15a, the dump truck 1 disables the accelerator operation and controls the vehicle speed so that the vehicle speed is constant in order to stabilize the output current.

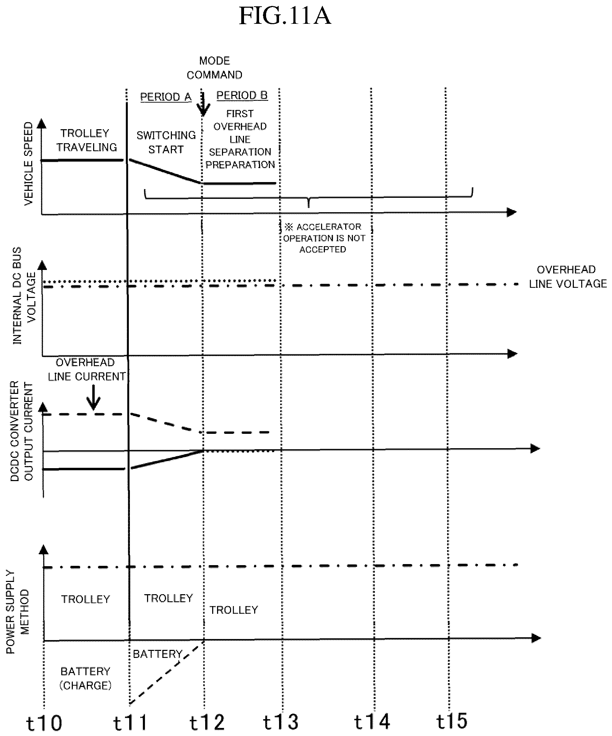

As shown in FIG. 11A, when the output current (output power) of the DCDC converter 3 becomes zero at time t12, the control device 13 transmits a command to the DCDC converter 3 to change the operation mode of the DCDC converter 3 from the power control mode to the voltage control mode. The control device 13 controls (switches) so that the DCDC converter 3 operates in a first overhead line separation preparation state.

During the period (period B) from time t12 to the time immediately before time 13, the DCDC converter 3 operates in the first overhead line separation preparation state. In first overhead line separation preparation state, the DCDC converter 3 operates in the voltage control mode. The control device 13 sets the power upper limit limiter to zero and sets the power lower limit limiter to zero. In the first overhead line separation preparation state, the DCDC converter 3 waits in a state where the output current from the DCDC converter 3 is zero.

Thereby, when the DCDC converter 3 switches from the power control mode to the voltage control mode, the influence on the output current of the DCDC converter 3 due to fluctuations in the overhead line voltage can be suppressed, as a result, it is possible to suppress the effect that the battery 2 is discharged unnecessarily, that an excessive current flows through the battery 2, and the like.

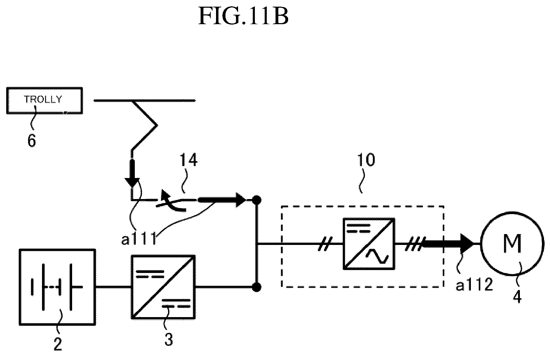

As shown in arrows a111 and a112 in FIG. 11B, in the period B, the electric motor 4 is driven by power supplied from the overhead line 6.

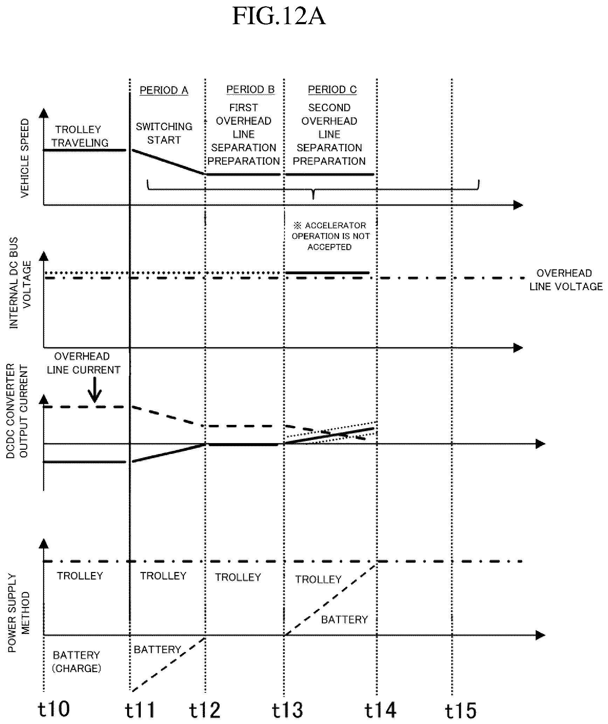

As shown in FIG. 12A, the control device 13 controls the DCDC converter 3 so that the DCDC converter 3 operates in a second overhead line separation preparation state during the period (period C) from time t13 to time t14 at which a certain period (predetermined period) has elapsed from time t12. In the second overhead line separation preparation state, the DCDC converter 3 operates in the voltage control mode. The control device 13 sets the power upper limit limiter so as to gradually or stepwise increase as time passes at a predetermined amount of change per unit of time from "the last power value of the time immediately before time t13 + predetermined power". The control device 13 sets the power lower limit limiter so as to gradually or stepwise increase as time passes at the same amount of change per predetermined unit time from "the final power value of the time immediately before time t13 - the predetermined power", as described above.

Further, the control device 13 transmits the voltage command to the DCDC converter 3 so that the output voltage is a voltage of "overhead line voltage + predetermined voltage". The DCDC converter 3 converts the voltage of DC power input from the battery 2 into a voltage according to the voltage command value, and outputs the DC power of the voltage according to the voltage command.

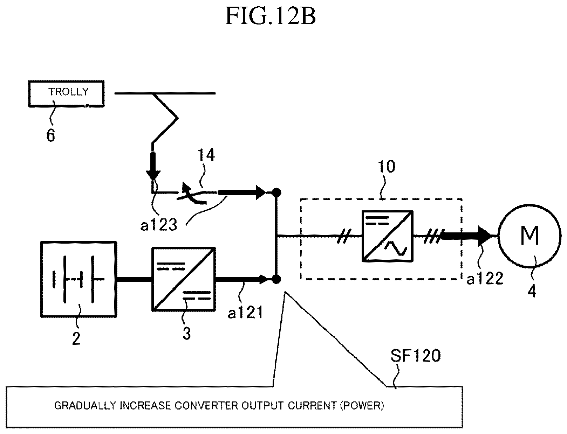

Thereby, as shown in FIG. 12B, in the period C, the output current (output power) of the DCDC converter 3 shown by arrow a121 as shown in the description of the dialogue balloon SF120 is controlled to gradually increase. On the other hand, the overhead line current supplied to the power converter 10 indicated by arrow A123 gradually decreases toward zero.

Thereby, the control device 13 can smoothly switch the power supply source of power supply to the electric motor 4 shown in arrow a122 from the overhead line 6 to the battery 2 (smoothly switching without sudden power fluctuations), as a result, the impact on the traveling of the dump truck 1 can be suppressed when switching from battery operation to trolley operation.

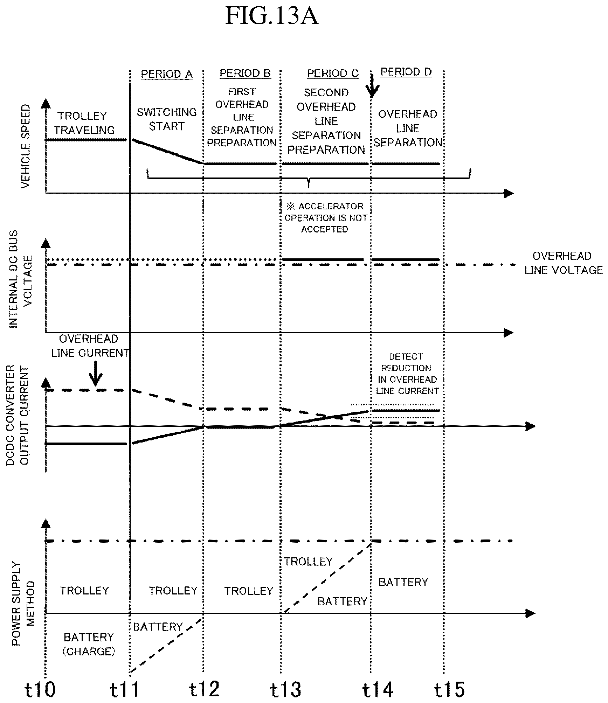

As shown in FIG. 13A, at time t14, when the overhead line current reaches a threshold value (for example, zero), the control device 13 switches the selector switch 14 from the ON state (conduction state) to the OFF state (non-conducting state). The control device 13 controls (switches) the DCDC converter 3 so that it operates in an overhead line disconnection state).

During the period (period D) from time t14 to the time immediately before time t15, the DCDC converter 3 operates in the overhead line disconnection state. In the overhead line disconnection state, the DCDC converter 3 operates in the voltage control mode. The control device 13 transmits the voltage command to the DCDC converter 3 so that the output voltage is a voltage of "overhead line voltage + predetermined voltage". The DCDC converter 3 converts the voltage of DC power input from the battery 2 into a voltage according to the voltage command value, and outputs the DC power of the voltage according to the voltage command.

The control device 13 controls the output power of the DCDC converter 3. Specifically, the control device 13 sets the power upper limit limiter to "the final power value of the time immediately before time t14 + a predetermined power". The control device 13 sets the power lower limit limiter to "the final power value of the time immediately before time t14 - predetermined power". As a result, the output power (output current) of the DCDC converter 3 is limited to the upper limit of the power upper limit limiter ("final power value at the time immediately before time t14 + predetermined power"). The output power (output current) of the DCDC converter 3 is limited with the power lower limit limiter ("final power value of the time immediately before time t14 - predetermined power") as the lower limit.

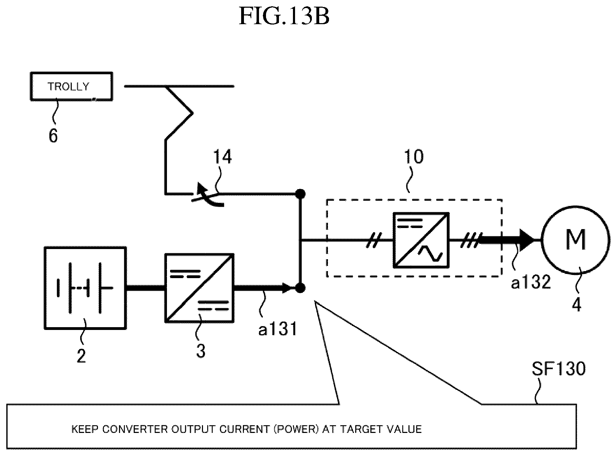

As shown in FIG. 13B, in the period D, as shown by arrows a131 and a132, the DC power from the battery 2 is input to the DCDC converter 3, converted to a voltage according to the voltage command, and output from the DCDC converter 3. The DC power output from the DCDC converter 3 is input to the power converter 10. The DC power input to the power converter 10 is converted into AC power and output, and input to the electric motor 4 as a drive power for driving the electric motor 4. As shown in the description of the dialogue balloon SF130, the output current of the DCDC converter 3 is kept at the target value.

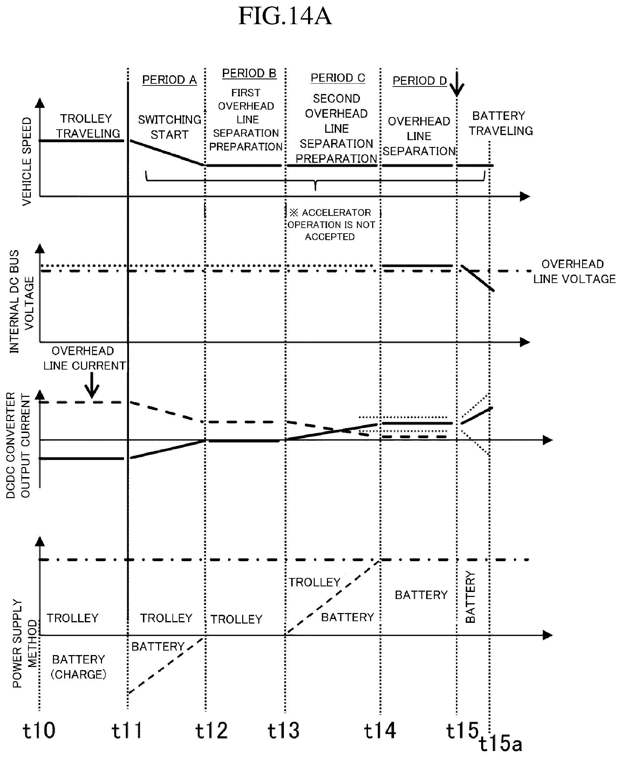

As shown in FIG. 14A, at time t15 after a certain period of time (predetermined period) has elapsed from time t14, the control device 13 controls (switches) the DCDC converter 3 so that it operates in the battery traveling state. During the period from time t15 to the time immediately before time t15a, the DCDC converter 3 operates in the battery traveling state. In the battery traveling state, the DCDC converter 3 operates in the voltage control mode. The control device 13 transmits the voltage command for controlling the internal DC bus voltage. The DCDC converter 3 converts the DC power input from the battery 2 into a voltage according to the voltage command, and outputs the DC power of the converted voltage.

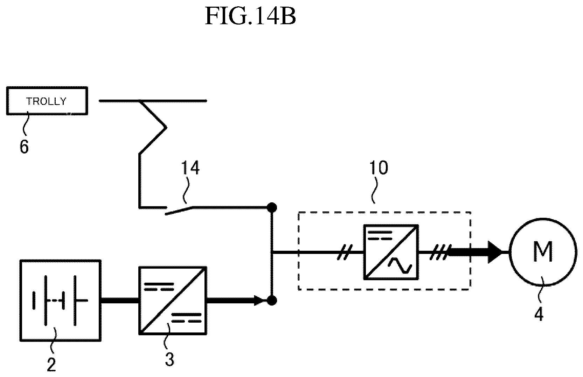

The control device 13 controls the output power of the DCDC converter 3. The control device 13 sets the power upper limit limiter so as to gradually or stepwise increase as time passes at a predetermined amount of change per unit time from "the final power value of the time immediately before time t15 + predetermined power". The control device 13 sets the power lower limit limiter so as to gradually or stepwise decrease as time passes at a predetermined amount of change per unit time from "the final power value of the time immediately before time t15 - the predetermined power". As a result, the limitation of the output power output from the DCDC converter 3 is gradually released. As shown in FIG. 14B, the electric motor 4 is driven by the power supplied from the battery 2 for a period from time t15 to the time immediately before time t15a.

As shown in FIG. 15A, after time t15a, the control device 13 continues to control the DCDC converter 3 so that it operates in the battery traveling state. After time t15a, the DCDC converter 3 operates in the battery traveling state. In the battery traveling state, the DCDC converter 3 operates in the voltage control mode.

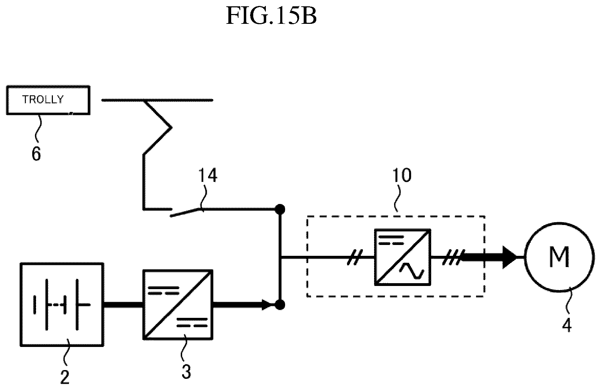

The control device 13 transmits the voltage command for controlling the internal DC bus voltage. The DCDC converter 3 converts the DC power input from the battery 2 into a voltage according to the voltage command, and outputs the DC power of the converted voltage. The control device 13 sets both the power upper limit limiter and the power lower limit limiter without constraint. As shown in FIG. 15B, the electric motor 4 is driven by the power supplied from the battery 2 for a period from time t15 to the time immediately before time t15a.

### <Effect>

As described above, the dump truck 1 according to the embodiment of the present invention can switch the power supply source to the electric motor while suppressing the adverse effect on the dump truck 1.

### <<MODIFICATIONS>>

The present invention is not limited to the above embodiments, and various modifications can be employed within the scope of the present invention. For example, the present invention can also have the following configuration.
[1] A control device for electric drive vehicle applied to a trolley rechargeable type electric drive vehicle comprising an electric motor, a battery, and a current collector, the trolley rechargeable type electric drive vehicle traveling using, as a power source, the electric motor driven by electric power supplied from the battery and / or an overhead line, the trolley rechargeable type electric drive vehicle being capable of charging the battery using the electric power supplied from the overhead line,
   wherein,
   the trolley rechargeable type electric drive vehicle comprises:
      a power converter that converts input DC power into AC power and outputs the AC power to the electric motor;
      a converter capable of operating in any one of:
         a voltage control state where the converter is connected to the power converter, the DC power from the battery is input, an input voltage is converted, and the DC power of the converted voltage is output to the power converter; and
         an electric power control state where the DC power from the overhead line is input, the input voltage is converted, and the DC power of the converted voltage is output to the battery;
      the current collector in which the input side of the electric power is connected to the overhead line and the output side of the electric power is connected to a connection point between the converter and the power converter; and
      a switch unit for switching to any of:
         an overhead line power supply state that is capable of setting either a conduction state or a non-conduction state between the current collector and the connection point; and that supplies, from the overhead line via the current collector, the electric power to the power converter or both of the power converter and the converter by making the conduction state between the overhead line and the connection point; and
         an overhead line power non-supply state that cuts off power supply from the overhead line to the power converter via the current collector by making the non-conduction state between the current collector and the connection point;
   the control device is configured to control the converter and the switch unit; and
   the control device is configured to:
      operate, when switching a power supply source to the electric motor from the battery to the overhead line, the converter in a power supply switching processing state in which an output current of the converter decreases toward zero after operating the converter in an overhead line connection stable waiting state that limits the output current output from the converter operating in the voltage control state to the power converter;
      switch, when switching the power supply source to the electric motor from the overhead line to the battery, the converter operating in the electric power control state from the electric power control state to the voltage control state; and
      operate, after operating the converter in a first overhead line separation preparation state that limits the output current output to the power converter to zero, the converter in a second overhead line separation preparation state in which the output current output from the converter to the power converter increases toward a target value.
[2] A control method for electric drive vehicle applied to a trolley rechargeable type electric drive vehicle comprising an electric motor, a battery, and a current collector, the trolley rechargeable type electric drive vehicle traveling using, as a power source, the electric motor driven by electric power supplied from the battery and / or an overhead line, the trolley rechargeable type electric drive vehicle being capable of charging the battery using the electric power supplied from the overhead line,
   wherein,
   the trolley rechargeable type electric drive vehicle comprises:
      a power converter that converts input DC power into AC power and outputs the AC power to the electric motor;
      a converter capable of operating in any one of:
         a voltage control state where the converter is connected to the power converter, the DC power from the battery is input, an input voltage is converted, and the DC power of the converted voltage is output to the power converter; and
         an electric power control state where the DC power from the overhead line is input, the input voltage is converted, and the DC power of the converted voltage is output to the battery;
      the current collector in which the input side of the electric power is connected to the overhead line and the output side of the electric power is connected to a connection point between the converter and the power converter;
      a switch unit for switching to any of:
         an overhead line power supply state that is capable of setting either a conduction state or a non-conduction state between the current collector and the connection point; and that supplies, from the overhead line via the current collector, the electric power to the power converter or both of the power converter and the converter by making the conduction state between the overhead line and the connection point; and
         an overhead line power non-supply state that cuts off power supply from the overhead line to the power converter via the current collector by making the non-conduction state between the current collector and the connection point; and
      a control device for controlling the converter and the switch unit; and
   the control method: by using the control device,
      operates, when switching a power supply source to the electric motor from the battery to the overhead line, the converter in a power supply switching processing state in which an output current of the converter decreases toward zero after operating the converter in an overhead line connection stable waiting state that limits the output current output from the converter operating in the voltage control state to the power converter;
      switches, when switching the power supply source to the electric motor from the overhead line to the battery, the converter operating in the electric power control state from the electric power control state to the voltage control state; and
      operates, after operating the converter in a first overhead line separation preparation state that limits the output current output to the power converter to zero, the converter in a second overhead line separation preparation state in which the output current output from the converter to the power converter increases toward a target value.

### Reference Signs List

1: dump truck, 2: battery, 3: DCDC converter, 4: electric motor, 5: pantograph, 6: overhead line, 10: power converter, 13: control device, 14: selector switch

## Claims

1. A trolley rechargeable type electric drive vehicle comprising an electric motor, a battery, and a current collector, the trolley rechargeable type electric drive vehicle traveling using, as a power source, the electric motor driven by electric power supplied from the battery and / or an overhead line, the trolley rechargeable type electric drive vehicle being capable of charging the battery using the electric power supplied from the overhead line,
wherein,
the trolley rechargeable type electric drive vehicle comprises:
a power converter that converts input DC power into AC power and outputs the AC power to the electric motor;
a converter capable of operating in any one of:
a voltage control state where the converter is connected to the power converter, the DC power from the battery is input, an input voltage is converted, and the DC power of the converted voltage is output to the power converter; and
an electric power control state where the DC power from the overhead line is input, the input voltage is converted, and the DC power of the converted voltage is output to the battery;
the current collector in which the input side of the electric power is connected to the overhead line and the output side of the electric power is connected to a connection point between the converter and the power converter;
a switch unit for switching to any of:
an overhead line power supply state that is capable of setting either a conduction state or a non-conduction state between the current collector and the connection point; and that supplies, from the overhead line via the current collector, the electric power to the power converter or both of the power converter and the converter by making the conduction state between the overhead line and the connection point; and
an overhead line power non-supply state that cuts off power supply from the overhead line to the power converter via the current collector by making the non-conduction state between the current collector and the connection point; and
a control device for controlling the converter and the switch unit; and
the control device is configured to:
operate, when switching a power supply source to the electric motor from the battery to the overhead line, the converter in a power supply switching processing state in which an output current of the converter decreases toward zero after operating the converter in an overhead line connection stable waiting state that limits the output current output from the converter operating in the voltage control state to the power converter;
switch, when switching the power supply source to the electric motor from the overhead line to the battery, the converter operating in the electric power control state from the electric power control state to the voltage control state; and
operate, after operating the converter in a first overhead line separation preparation state that limits the output current output to the power converter to zero, the converter in a second overhead line separation preparation state in which the output current output from the converter to the power converter increases toward a target value.

2. The electric drive vehicle according to claim 1,
wherein,
the control device is configured to operate, when switching the power supply source from the battery to the overhead line, the converter in a switching preparation state in which output power of the converter is raised so that it is equal to or greater than an overhead line voltage before timing of making a connection state between the overhead line and the connection point in the conduction state by the switch unit.

3. The electric drive vehicle according to claim 2,
wherein,
the control device is configured to switch by the switch unit so as to operate the converter in the overhead line connection stable waiting state at the timing of setting the connection state between the overhead line and the connection point in the conduction state.

4. The electric drive vehicle according to claim 3,
wherein,
the control device is configured to:
operate the converter for a predetermined period of time in the overhead line connection stable waiting state; and
then operate the converter in the power supply switching processing state.

5. The electric drive vehicle according to claim 1,
wherein,
the control device is configured to operate, when switching the power supply source from the overhead line to the battery, the converter in a switching start state in which the output current to the battery is reduced to zero before the first overhead line separation preparation state.

6. The electric drive vehicle according to claim 5,
wherein,
the control device is configured to switch so as to operate the converter in the first overhead line separation preparation state at timing when the output current to the battery becomes zero.

7. The electric drive vehicle according to claim 6,
wherein,
the control device is configured to:
operate the converter in the first overhead line separation preparation state for a predetermined period of time;
then operate the converter in the second overhead line separation preparation state; and
then set, at timing when an overhead line current supplied from the overhead line to the power converter reaches a predetermined threshold value, the connection state between the collector and the connection point in the non-conduction state by the switch unit.

8. A control device for electric drive vehicle applied to a trolley rechargeable type electric drive vehicle comprising an electric motor, a battery, and a current collector, the trolley rechargeable type electric drive vehicle traveling using, as a power source, the electric motor driven by electric power supplied from the battery and / or an overhead line, the trolley rechargeable type electric drive vehicle being capable of charging the battery using the electric power supplied from the overhead line,
wherein,
the trolley rechargeable type electric drive vehicle comprises:
a power converter that converts input DC power into AC power and outputs the AC power to the electric motor;
a converter capable of operating in any one of:
a voltage control state where the converter is connected to the power converter, the DC power from the battery is input, an input voltage is converted, and the DC power of the converted voltage is output to the power converter; and
an electric power control state where the DC power from the overhead line is input, the input voltage is converted, and the DC power of the converted voltage is output to the battery;
the current collector in which the input side of the electric power is connected to the overhead line and the output side of the electric power is connected to a connection point between the converter and the power converter; and
a switch unit for switching to any of:
an overhead line power supply state that is capable of setting either a conduction state or a non-conduction state between the current collector and the connection point; and that supplies, from the overhead line via the current collector, the electric power to the power converter or both of the power converter and the converter by making the conduction state between the overhead line and the connection point; and
an overhead line power non-supply state that cuts off power supply from the overhead line to the power converter via the current collector by making the non-conduction state between the current collector and the connection point;
the control device is configured to control the converter and the switch unit; and
the control device is configured to:
operate, when switching a power supply source to the electric motor from the battery to the overhead line, the converter in a power supply switching processing state in which an output current of the converter decreases toward zero after operating the converter in an overhead line connection stable waiting state that limits the output current output from the converter operating in the voltage control state to the power converter;
switch, when switching the power supply source to the electric motor from the overhead line to the battery, the converter operating in the electric power control state from the electric power control state to the voltage control state; and
operate, after operating the converter in a first overhead line separation preparation state that limits the output current output to the power converter to zero, the converter in a second overhead line separation preparation state in which the output current output from the converter to the power converter increases toward a target value.

9. A control method for electric drive vehicle applied to a trolley rechargeable type electric drive vehicle comprising an electric motor, a battery, and a current collector, the trolley rechargeable type electric drive vehicle traveling using, as a power source, the electric motor driven by electric power supplied from the battery and / or an overhead line, the trolley rechargeable type electric drive vehicle being capable of charging the battery using the electric power supplied from the overhead line,
wherein,
the trolley rechargeable type electric drive vehicle comprises:
a power converter that converts input DC power into AC power and outputs the AC power to the electric motor;
a converter capable of operating in any one of:
a voltage control state where the converter is connected to the power converter, the DC power from the battery is input, an input voltage is converted, and the DC power of the converted voltage is output to the power converter; and
an electric power control state where the DC power from the overhead line is input, the input voltage is converted, and the DC power of the converted voltage is output to the battery;
the current collector in which the input side of the electric power is connected to the overhead line and the output side of the electric power is connected to a connection point between the converter and the power converter;
a switch unit for switching to any of:
an overhead line power supply state that is capable of setting either a conduction state or a non-conduction state between the current collector and the connection point; and that supplies, from the overhead line via the current collector, the electric power to the power converter or both of the power converter and the converter by making the conduction state between the overhead line and the connection point; and
an overhead line power non-supply state that cuts off power supply from the overhead line to the power converter via the current collector by making the non-conduction state between the current collector and the connection point; and
a control device for controlling the converter and the switch unit; and
the control method: by using the control device,
operates, when switching a power supply source to the electric motor from the battery to the overhead line, the converter in a power supply switching processing state in which an output current of the converter decreases toward zero after operating the converter in an overhead line connection stable waiting state that limits the output current output from the converter operating in the voltage control state to the power converter;
switches, when switching the power supply source to the electric motor from the overhead line to the battery, the converter operating in the electric power control state from the electric power control state to the voltage control state; and
operates, after operating the converter in a first overhead line separation preparation state that limits the output current output to the power converter to zero, the converter in a second overhead line separation preparation state in which the output current output from the converter to the power converter increases toward a target value.
